(19) Europäisches Patentamt / European Patent Office / Office européen des brevets

(11) **EP 2 226 955 A2**

(12) **EUROPEAN PATENT APPLICATION**

(43) Date of publication:
**08.09.2010 Bulletin 2010/36**

(51) Int Cl.:
**H04B 17/00** (2006.01)

(21) Application number: **10155077.0**

(22) Date of filing: **01.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **02.03.2009 JP 2009047759**

(71) Applicant: **Fujitsu Limited**
**Kawasaki-shi, Kanagawa 211-8588 (JP)**

(72) Inventors:
• **Shibuya, Yasuhiro**
  **Kawasaki-shi Kanagawa 211-8588 (JP)**
• **Okawa, Shigeru**
  **Kawasaki-shi Kanagawa 211-8588 (JP)**

(74) Representative: **Wilding, Frances Ward**
**Haseltine Lake LLP**
**Lincoln House, 5th Floor**
**300 High Holborn**
**London WC1V 7JH (GB)**

(54) **Wireless communication apparatus and method**

(57) A wireless communication apparatus that performs communication uses a communication method in which a transmission period and a reception period alternate with each other. The wireless communication apparatus includes a first antenna that transmits a radio signal during the transmission period and receives a radio signal during the reception period, a second antenna that receives the radio signal transmitted from the first antenna during the transmission period and receives a radio signal during the reception period, a first determining unit that determines a failure of the first antenna based on a ratio of a transmission power to a returning power for the radio signal transmitted from the first antenna, and a second determining unit that determines a failure of the second antenna based on a reception power of a radio signal received by the second antenna during the transmission period and a determination result of the first determining unit.

**FIG. 2**

EP 2 226 955 A2

**Description**

FIELD

The present invention relates to a wireless communication apparatus in a time division duplex (TDD) mobile wireless communications system.

BACKGROUND

Recently, a technology called Worldwide Interoperability for Microwave Access (WiMAX) has been the focus of considerable attention as a wireless communications technology. WiMAX has been developed as a method for constructing a wireless metropolitan area network(MAN) by applying a wireless technology to a MAN, which mutually connects local area networks (LANs) or the like in city areas or specific regions, by realizing wireless connections between users' homes and a communications provider instead of using telephone lines or optical fibers. WiMAX can cover an area having a radius of about 50 km at a maximum transmission speed of about 70 Mbits/sec using one wireless base station apparatus.

At present, as the WiMAX communications specifications, IEEE standard 802.16-2004 for fixed terminals and IEEE standard 802.16e-2005 for mobile terminals have been defined by the Institute of Electrical and Electronic Engineers (IEEE) (see IEEE standard 802.16-2004 (released Oct. 01, 2004) and IEEE standard 802.16e-2005 (released Feb. 28, 2006)).

In both of the communications specifications, a time division duplex (TDD) system is used as the standard, and the frequency bands used are 11 GHz or lower for IEEE standard 802.16-2004, and 6 GHz or lower for IEEE standard 802.16e-2005. Actually, frequencies such as 2.3 GHz, 2.5 GHz, and 3.5 GHz, which are higher than those used in the present mobile phone communications (for example, 800 MHz and 2GHz), are assigned to both of the communications standards.

A typical wireless base station apparatus for WiMAX is provided with a plurality of antennas to prevent a reduction in gain due to the use of high frequency bands, whereby the reception gain is ensured by using diversity reception in an uplink. For instance, a wireless base station apparatus is provided with at least one reception antenna exclusively used for reception in addition to at least one transmission/reception antenna used for both reception and transmission, so as to increase the reception gain using diversity reception in which a signal received by the transmission/reception antenna and a signal received by the reception antenna are combined.

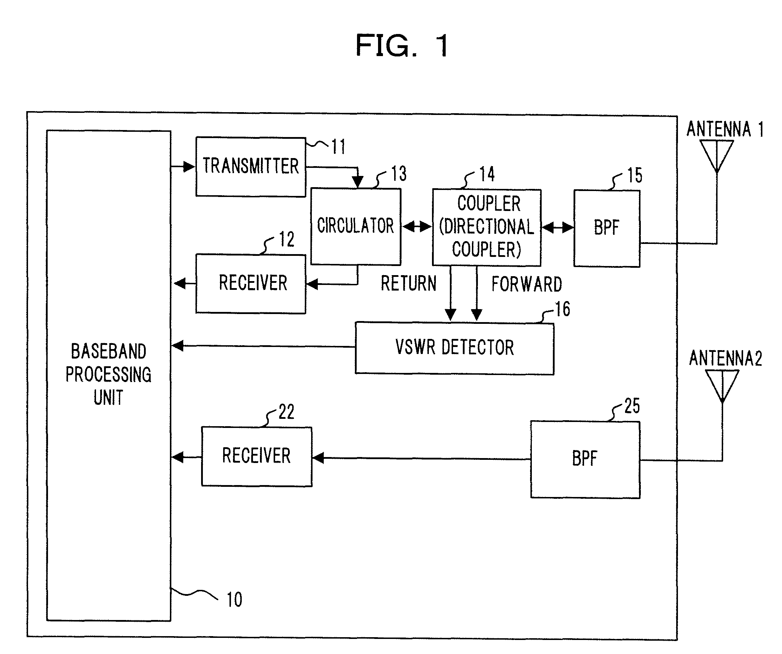

Fig. 1 is a diagram illustrating an exemplary configuration of an existing wireless base station apparatus. The wireless base station apparatus illustrated in Fig. 1 is provided with a transmission/reception antenna 1 used for both reception and transmission and a reception antenna 2 exclusively used for reception. A transmission signal generated by a baseband processing unit 10 is modulated by a transmitter 11, passed through a circulator 13, a coupler (directional coupler) 14, and a bandpass filter (BPF) 15, and then transmitted from the transmission/reception antenna 1 as a radio signal. The circulator 13 causes a signal from the transmitter 11 to be output towards the transmission/reception antenna 1, and causes a signal from the transmission/reception antenna 1 to be output to a receiver 12. The coupler 14 outputs part of the signal from the transmitter 11 to a VSWR detector 16 (explained later) and part of the signal from the transmission/reception antenna 1 to the VSWR detector 16.

A radio signal from a mobile terminal is received by both of the antennas 1 and 2. The radio signals received by the antennas 1 and 2 are respectively passed through the BPF 15 and a BPF 25 (further through the coupler 14 and the circulator 13 for the radio signal received by the antenna 1), and after being respectively demodulated by the receiver 12 and a receiver 22, are input to the baseband processing unit 10, where they are subjected to combining processing.

The transmission/reception antenna 1 subsystem is provided with the VSWR detector 16 for detecting a failure of the transmission/reception antenna 1. The VSWR detector 16, during a transmission period, measures a voltage standing wave ratio (VSWR) based on the ratio of the transmission power of a transmission signal from the transmitter 11 to the returning power of the transmission signal reflected by the transmission/reception antenna 1, to detect whether or not a failure of the transmission/reception antenna 1 has occurred.

When impedance mismatching exists in a transmission line of a high frequency signal (traveling wave) traveling in a propagation direction, signal reflection occurs at the mismatching point, and a signal component (returning wave) traveling along the transmission line in the reverse direction is generated. A VSWR indicates the degree of reflection of the high frequency signal, defined by the following equations.

$$VSWR = \frac{1 + |\rho|}{1 - |\rho|}$$

$$\rho = \frac{Z - Z_0}{Z + Z_0} = \frac{V_2}{V_1}$$

Here, V1 is the voltage of a traveling wave, V2 is the voltage of a returning wave, Z0 is the characteristic impedance of a transmission line, Z is a load impedance, and σ is a voltage reflection coefficient. The magnitude of a voltage is obtained from the measured power. Note that a return loss or a reflection coefficient may be used instead of a VSWR as a value regarding the ratio of a transmission power to a returning power. Here, description is made using a VSWR as a representative example. The relation between a return loss or a reflection coefficient and a VSWR is given by the following equations.

Return loss = 20log10(VSWR + 1/VSWR - 1)

Reflection coefficient $|\Gamma|$ = (VSWR - 1)/(VSWR + 1)

When a failure occurs at an antenna (including a cable connected to the antenna), the power of a transmission signal is not emitted from the antenna, and hence, the reflected component is increased, thereby worsening the VSWR. For this reason, a VSWR is used to detect a failure of an antenna. For example, the failure detection function of the baseband processing unit 10 determines that a failure has occurred in the antennas when the VSWR is greater than a specified threshold.

However, since a VSWR is measured using a transmission signal, it cannot be applied to the reception antenna 2; therefore, failure detection for the reception antenna 2 is not performed in existing wireless base station apparatuses.

It is therefore considered desirable to provide a wireless communication apparatus that detects a failure of a reception antenna.

SUMMARY

According to an aspect of the invention (or at least an aspect of one embodiment), a wireless communication apparatus performs communication using a communication method in which a transmission period and a reception period alternate with each other. The wireless communication apparatus includes a first antenna that transmits a radio signal during the transmission period and receives a radio signal during the reception period, and a second antenna that receives the radio signal transmitted from the first antenna during the transmission period and receives a radio signal during the reception period. The wireless communication apparatus also includes a first determining unit that determines a failure of the first antenna based on a ratio of a transmission power to a returning power for the radio signal transmitted from the first antenna, and a second determining unit that determines a failure of the second antenna based on a reception power of a radio signal received by the second antenna during the transmission period and a determination result of the first determining unit.

The advantages of the invention will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF THE DRAWINGS

Fig. 1 is a diagram illustrating an exemplary configuration of a wireless base station apparatus;

Fig. 2 is a diagram illustrating a first configuration example of a wireless base station apparatus according to the present embodiment;

Fig. 3 is a diagram illustrating the operation timings of antennas;

Fig. 4 is a diagram illustrating an exemplary configuration of a comparator unit;

Fig. 5 is a truth table for determining failures of the antennas;

Fig. 6 is a diagram illustrating a second configuration example of the wireless base station apparatus according to the present embodiment; and

Fig. 7 is a diagram illustrating a third configuration example of the wireless base station apparatus according to the present embodiment.

DESCRIPTION OF THE PREFERRED EMBODIMENTS

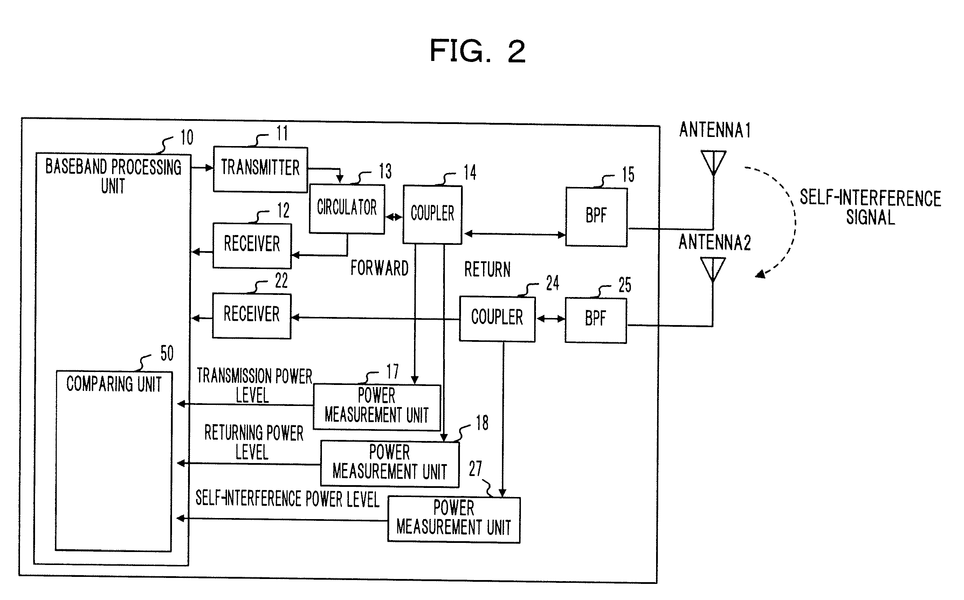

Fig. 2 is a diagram illustrating a first configuration example of a wireless base station apparatus according to the present embodiment. The wireless base station apparatus, which is an example of a wireless communication apparatus according to the present embodiment, performs communication based on a TDD system in which the same frequency is used for transmission and reception, and periods of transmission and reception alternate with each other. The wireless base station apparatus is provided with one transmission/reception antenna 1 used for both transmission and reception and one reception antenna 2 exclusively used for reception.

During a transmission period, a signal generated by a baseband processing unit 10 is modulated by a transmitter 11, is passed through a circulator 13, a coupler (directional coupler) 14, and a bandpass filter (BPF) 15, and then transmitted from the transmission/reception antenna 1 as a radio signal. The circulator 13 causes a signal from the transmitter 11 to be output towards the transmission/reception antenna 1, and a signal from the transmission/reception antenna 1 to be output to a receiver 12. The coupler 14 outputs part of the signal (forward signal) from the transmitter 11 to a power measurement unit 17. The coupler 14 outputs part of a signal (reverse signal) reflected at the transmission/reception antenna 1 to a power measurement unit 18. The power measurement units 17 and 18 respectively measure a transmission power and the returning power during a transmission period, and output the measured values, after conversion to digital signals, to a comparing unit 50 of the baseband processing unit 10.

A radio signal (transmission signal) emitted from the transmission/reception antenna 1 is received by the reception antenna 2 during a transmission period. In the wireless base station apparatus according to the present embodiment, during a transmission period, a power measurement unit 27 measures a received power (hereinafter, also called a "self-interference power") of a radio signal (hereinafter, also called a "self-interference signal") emitted from the transmission/reception antenna 1 and received by the reception antenna 2. The self-interference signal received by the reception antenna 2 is input to a coupler 24 through a BPF 25. The coupler 24 outputs part of the received signal to the power measurement unit 27. The power measurement unit 27 measures a reception power at the reception antenna 2 during a transmission period, and outputs the measured value to the comparing unit 50 of the baseband processing unit 10, after conversion to a digital signal.

The wireless base station apparatus of the present embodiment detects a failure of the reception antenna 2 in addition to the transmission/reception antenna 1 based on a power measured by the power measurement units 17, 18 and 27, during a transmission period, as will be described later.

During a transmission period, since the receiver 12 and a receiver 22 are not in operation, the receivers 12 and 22 do not perform demodulation processing for a signal received from the couplers 14 and 24.

During a reception period, a radio signal from a mobile terminal (not illustrated) is received by the transmission/reception antenna 1 and the reception antenna 2. A signal received by the transmission/reception antenna 1 is input to the receiver 12 through the BPF 15, the coupler 14, and the circulator 13, and demodulated by the receiver 12. A signal received by the reception antenna 2 is input to the receiver 22 through the BPF 25 and the coupler 24, and demodulated by the receiver 22. The received signals respectively demodulated by the receivers 12 and 22 are input to the baseband processing unit 10, where they are subjected to combining processing. Although the couplers 14 and 24 respectively output part of the received signals to the power measurement units 18 and 27 also during a reception period, the signals during a reception period are not used for antenna failure detection processing described later, in the present example of the embodiment.

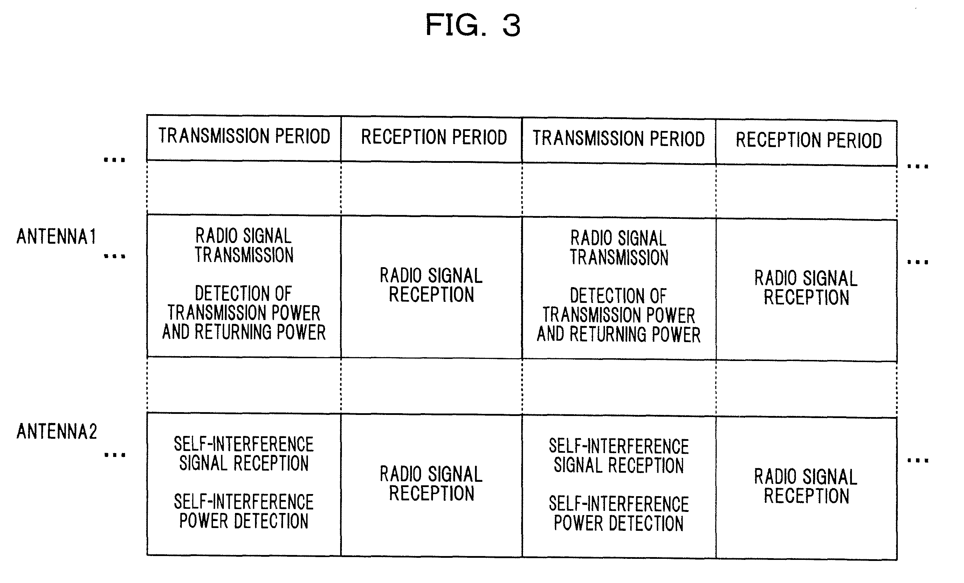

Fig. 3 is a diagram illustrating the operation timings of the antenna 1 and the antenna 2. During a transmission period of the wireless base station apparatus, the antenna 1 emits a radio signal at a specified transmission power, and the transmission power and the returning power are measured. During the transmission period, the antenna 2 receives a self-interference signal of a radio signal emitted from the antenna 1, and the self-interference power is measured. During the reception period, the antennas 1 and 2 receive an uplink signal from a mobile terminal. In a TDD system, the transmission period and the reception period alternate with each other, and during the transmission period, uplink signals from mobile terminals are not received. In the present example of the embodiment, the self-interference signal of a radio signal emitted from the transmission/reception antenna 1 is received by the reception antenna 2, and a failure of the antenna 2 exclusively used for reception is detected based on the power of the self-interference signal, by utilizing the transmission period in which uplink signals are not received.

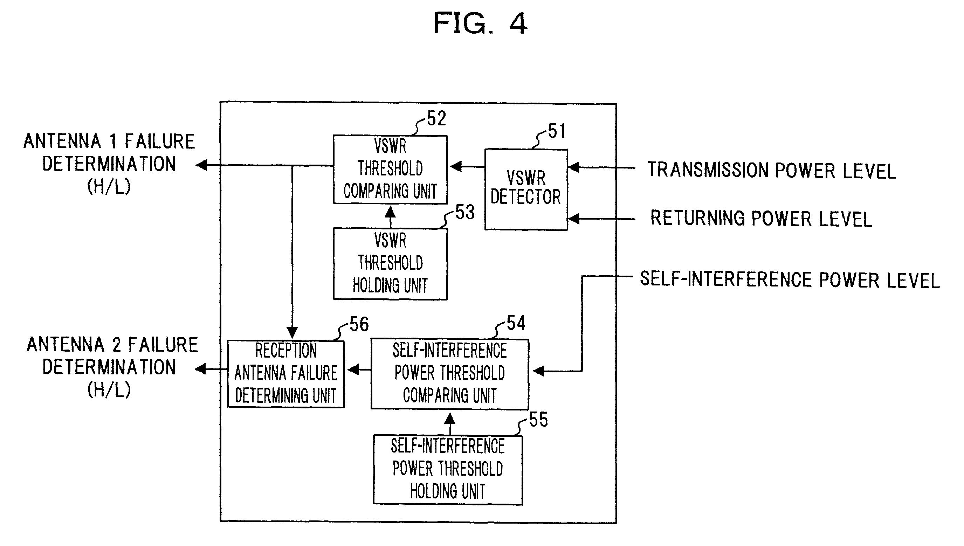

Fig. 4 is a diagram illustrating an exemplary configuration of the comparing unit 50. A VSWR detector 51 computes a VSWR based on a transmission power level obtained by the power measurement unit 17 and a returning power level obtained by the power measurement unit 18. A VSWR threshold comparing unit 52 compares a VSWR threshold set in a VSWR threshold holding unit 53 and a VSWR obtained by the VSWR detector, and determines whether or not the obtained VSWR exceeds the VSWR threshold. When the obtained VSWR exceeds the VSWR threshold, the VSWR threshold comparing unit 52 determines that the antenna 1 has failed, and outputs an abnormality notification (H-level signal). When the obtained VSWR does not exceed the VSWR threshold, the VSWR threshold comparing unit 52 outputs a normality notification (L-level signal). The VSWR threshold may be, for example, a VSWR value when the antenna 1 is in a normal state or a VSWR value around this value. When the antenna 1 has failed and a radio signal having the transmission power in a normal state is not emitted, the reflection of a transmission signal at the antenna 1 and the resultant VSWR increase in comparison with the normal state of the antenna 1. Hence, the obtained VSWR exceeds the VSWR threshold, thereby making it possible to detect a failure of the antenna 1.

A self-interference power threshold comparing unit 54 compares the self-interference power threshold set in a self-interference power threshold holding unit 55 with the power of a self-interference signal from the power measurement unit 27 and determines whether or not the self-interference power threshold is exceeded. The self-interference power threshold is set in advance based on the transmission power of a signal emitted from the antenna 1 and power attenuation in accordance with the distance between the antenna 1 and the antenna 2. For instance, when the transmission power of a signal emitted from the antenna 1 is 40 dBm, and when the distance between the antenna 1 and the antenna 2 is 0.3 m and hence the amount of attenuation is 30 dBm, the reception power of a self-interference signal at the antenna 2 becomes 10 dBm. In this case, the self-interference power threshold may be set to around 10 dBm or below.

When the reception power at the antenna 2 is equal to or lower than the self-interference power threshold, the self-interference power threshold comparing unit 54 outputs an abnormality notification (H-level signal), and outputs a normality notification (L-level signal) when the reception power at the antenna 2 exceeds the self-interference power threshold.

The output signal of the self-interference power threshold comparing unit 54 is input to a reception antenna failure determining unit 56. The reception antenna failure determining unit 56 determines whether or not the reception antenna 2 has failed based on the output signal (H/L) of the self-interference power threshold comparing unit 54 and the output signal (H/L) of the VSWR threshold comparing unit 52. When the reception power at the antenna 2 is equal to or lower than the self-interference power threshold, this is considered to include not only cases in which the antenna 2 (including a cable connected thereto) itself has a failure but also cases in which a radio signal having a specified transmission power is not emitted from the antenna 1 due to the failure of the antenna 1. In other words, this may be a case in which the reception power at the antenna 2 becomes equal to or lower than the self-interference power threshold because the transmission power itself of a signal emitted from the antenna 1 is low even when the antenna 2 is normal. Hence, the reception antenna failure determining unit 56 determines that the antenna 2 has failed and outputs an abnormality notification (H-level signal) only when the VSWR threshold comparing unit 52 outputs a normality notification (L-level signal indicating that the antenna 1 has not failed) and at the same time the self-interference power threshold comparing unit 54 outputs an abnormality notification (H-level signal).

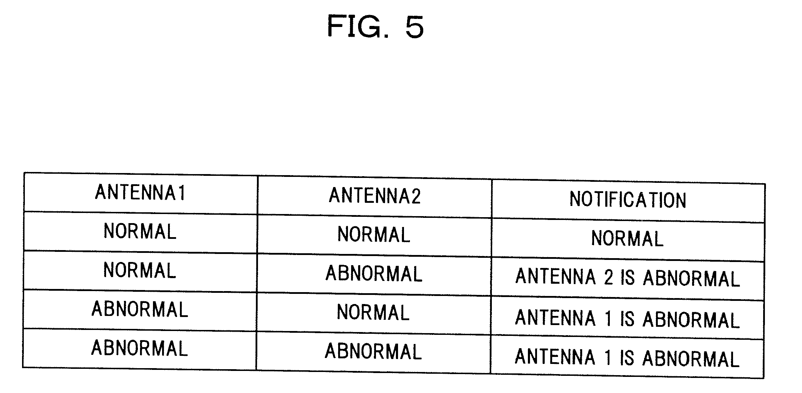

Fig. 5 is a truth table for determining failures of the antennas 1 and 2. When the output of the VSWR threshold comparing unit 52 indicates "abnormal", the antenna 1 is determined to have a failure irrespective of the output level of the self-interference power threshold comparing unit 54 (without determining that the antenna 2 has a failure even when the output of the self-interference power threshold comparing unit 54 indicates "abnormal"). On the other hand, when the output of the VSWR threshold comparing unit 52 indicates "normal" and the output of the self-interference power threshold comparing unit 54 indicates "abnormal", it is determined that the antenna 2 has a failure. When both the outputs of the VSWR threshold comparing unit 52 and the self-interference power threshold comparing unit 54 indicate "normal", it is determined that both the antenna 1 and the antenna 2 are normal.

In this manner, during a transmission period, a failure of the antenna 2, which is a reception-only antenna, may be detected based on the result of failure determination for the antenna 1 using VSWR measurement and the reception power of a self-interference signal received by the antenna 2.

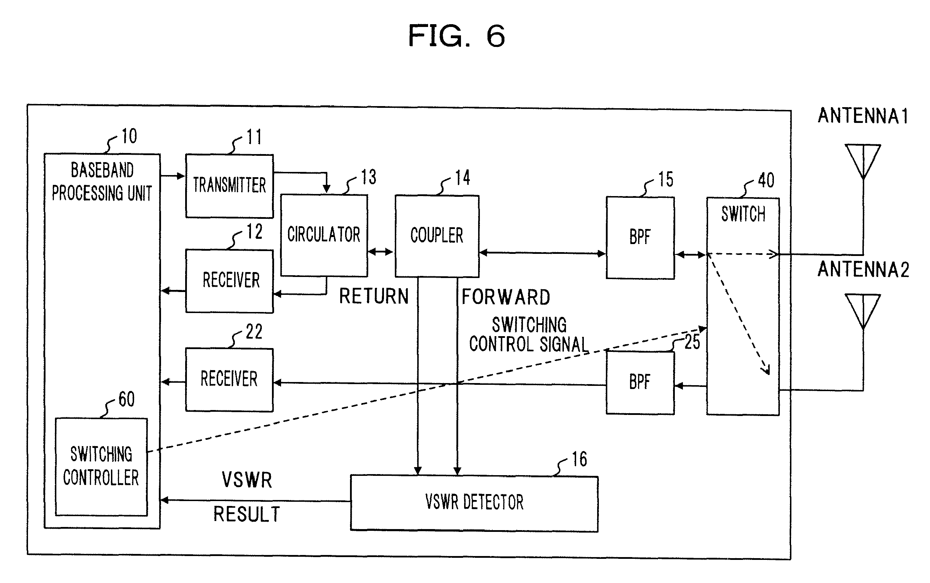

Fig. 6 is a diagram illustrating a second configuration example of the wireless base station apparatus according to the present embodiment. Also in the second configuration example, similar to the first configuration example, the wireless base station apparatus performs communication based on a TDD system in which the same frequency is used for transmission and reception, and periods of transmission and reception alternate with each other. Among two antennas 1 and 2 provided in the wireless base station apparatus of the second configuration example, one functions as a transmission/reception antenna used for both transmission and reception, and the other functions as a reception antenna exclusively used for reception. These antennas may be switched using a switch 40. The switch 40 switches only the transmission path of a transmission signal (downlink signal) during a transmission period, and does not switch the reception path of a reception signal (uplink signal) during a reception period.

During a transmission period, a signal generated by a baseband processing unit 10 is modulated by a transmitter 11, passed through a circulator 13, a coupler 14, and further a bandpass filter (BPF) 15, and then transmitted from the antenna (antenna 1 or 2) specified by the switch 40 as a radio signal. The coupler 14 outputs part of the signal from the transmitter 11 to a VSWR detector 16 and outputs part of a signal reflected at the antenna (antenna 1 or 2) for transmitting a transmission signal to the VSWR detector 16. The VSWR detector 16 measures a VSWR and outputs the measurement results to a switching controller 60.

During a reception period, a radio signal from a mobile terminal is received by both of the antennas 1 and 2. Signals received by the antennas 1 and 2 are respectively input to receivers 12 and 22 through the BPF 15 and a BPF 35 (further through the coupler 14 and the circulator 13 for the radio signal received by the antenna 1), and after being demodulated by the receivers 12 and 22, are input to the baseband processing unit 10, where they are subjected to combining processing.

The switching controller 60 of the baseband processing unit 10 controls the switch 40 based on a VSWR measured by the VSWR detector 16, and switches the antenna that outputs a transmission signal. For instance, when the VSWR measured by the VSWR detector 16 exceeds a specified threshold when a transmission signal is being output from the antenna 1, the switching controller 60 switches the switch 40 so as to cause the transmission signal to be output from the antenna 2, determining that the antenna 1 has a failure. On the other hand, when the VSWR measured by the VSWR detector 16 exceeds a specified threshold when a transmission signal is being output from the antenna 2, the switching controller 60 switches the switch 40 so as to cause the transmission signal to be output from the antenna 1, determining that the antenna 2 has a failure.

In this manner, when a failure has been detected, by measuring a VSWR, in the antenna currently being used for both transmission and reception, interruption in transmission is prevented by using the antenna being exclusively used for reception as a transmission/reception antenna, by the switch 40. Furthermore, when the transmission power decreases due to some abnormalities even when transmission itself has not been terminated, transmission using an antenna supplying a higher output power may be realized by switching the transmission/reception antenna upon detection of a measured VSWR that exceeds a specified threshold.

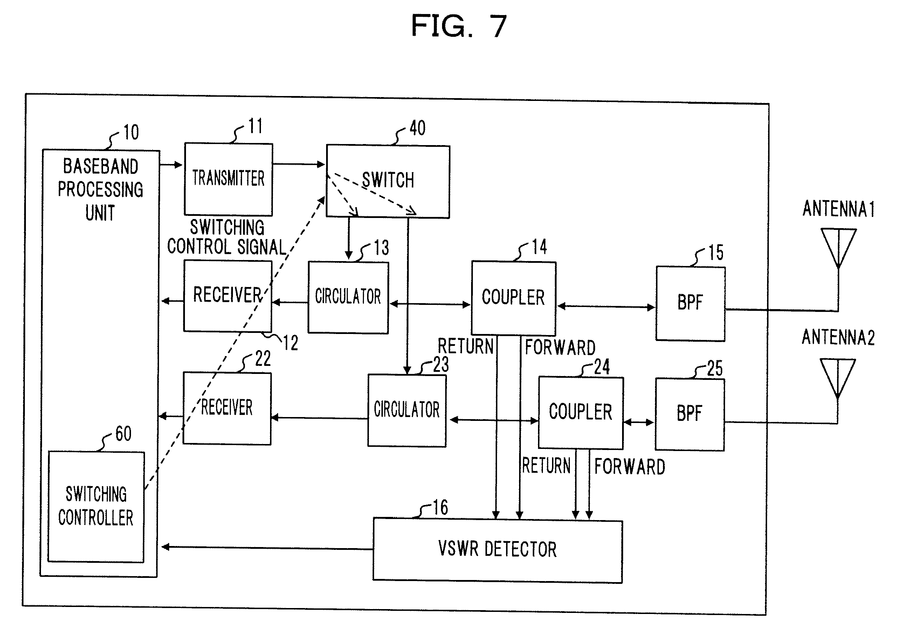

Fig. 7 is a diagram illustrating a third configuration example of the wireless base station apparatus according to the present embodiment. In comparison with the second configuration example, the third configuration example is provided with a switch 40 between a transmitter 11 and a circulator 13. In this case, a circulator 23 and a coupler 24 are also provided in the reception path of the antenna 2. When a transmission signal is output from the antenna 2, the transmission signal is passed through the transmitter 11, the switch 40, the circulator 23, the coupler 24, and a BPF 25. A reception signal received by the antenna 2 is passed through the BPF 25, the coupler 24, and the circulator 23, and is input to a receiver 22. A VSWR detector 16 measures a VSWR by obtaining a transmission signal and a reflected signal from the coupler 14 when the antenna 1 is used as a transmission/reception antenna, and from the coupler 24 when the antenna 2 is used as a transmission/reception antenna. The measured VSWR is output to a switching controller 60, and the switching controller 60 performs switching control of the switch 40 based on the measured VSWR, similar to the second configuration example.

In the above-described second and third configuration examples, examples have been described in which the switching controller 60 switches the switch 40 when the VSWR measured for a currently used transmission/reception antenna exceeds a specified threshold. However, the timing of switching the switch 40 is not limited to this. For instance, a failure of a reception antenna may be detected by switching the switch 40 and measuring the VSWR of the reception antenna in the following cases.

(1) In the state in which the antenna 1 is used as a transmission/reception antenna and the antenna 2 is used as a reception antenna, the switching controller 60 switches the switch 40 regularly (periodically) or at a predetermined timing and causes the reception antenna 2 to transmit a transmission signal. Thereby, the VSWR of the antenna 2 may be measured, and a failure of a reception antenna may be detected.

(2) An operator, through the operation of the switching controller 60, causes the switch 40 to be switched at any time, thereby causing the reception antenna 2 to transmit a transmission signal.

In this manner, the VSWR of the reception antenna 2 may be measured by switching the switch 40 at a specified timing and causing the reception antenna 2 to transmit a transmission signal, thereby allowing a failure of a reception antenna to be detected. After the measurement of the VSWR of the reception antenna 2, the switch 40 is switched again to restore the original state of the antennas.

In the present embodiment, although configurations have been illustrated in which a wireless communication apparatus is provided with one transmission/reception antenna and one reception antenna, a plurality of transmission/reception antennas and reception antennas may be provided, and the respective numbers of transmission/reception antennas and reception antennas may be different.

The wireless communication apparatus according to the present embodiment may be applied to a wireless base station apparatus of a TDD-based mobile wireless system including WiMAX.

The wireless communication apparatus may detect a failure of a reception antenna by using a reception power of a radio signal transmitted from a transmission/reception antenna and received by a reception antenna, during a transmission period.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present invention has been described in detail, it should be understood that the various changes, substitutions, and alterations could be made hereto without departing from the spirit and scope of the invention.

**Claims**

1. A wireless communication apparatus that performs communication using a communication method in which a transmission period and a reception period alternate with each other, the wireless communication apparatus comprising:

   a first antenna that transmits a radio signal during the transmission period and receives a radio signal during the reception period;
   a second antenna that receives the radio signal transmitted from the first antenna during the transmission period and receives a radio signal during the reception period;
   a first determining unit that determines a failure of the first antenna based on a ratio of a transmission power to a returning power for the radio signal transmitted from the first antenna; and
   a second determining unit that determines a failure of the second antenna based on a reception power of a radio signal received by the second antenna during the transmission period and a determination result of the first determining unit.

2. The wireless communication apparatus according to Claim 1, wherein the second determining unit determines that the second antenna has a failure when the reception power is equal to or lower than a specified threshold and the first determining unit has determined that the first antenna is normal.

3. A wireless communication apparatus in which a transmission period and a reception period alternate with each other, a radio signal is transmitted from either a first antenna or a second antenna during the transmission period, and a radio signal is received by both the first and second antennas during the reception period, the apparatus comprising:

   a switch that switches an antenna for transmitting a radio signal during the transmission period between either of the first antenna or the second antenna;
   a determining unit that determines a failure of the antenna for transmitting a radio signal during the transmission period based on a ratio of a transmission power to a returning power for the transmitted radio signal; and
   a controller that performs switching control of the switch based on a determination result of the determining unit.

4. The wireless communication apparatus according to Claim 3, wherein the determining unit determines the failure of the antenna for transmitting a radio signal during the transmission period, based on the ratio of the transmission power to the returning power for the radio signal transmitted from the antenna, selected by the switch, for transmitting a radio signal during the transmission period.

5. A wireless communication method that performs communication using a communication method in which a transmission period and a reception period alternate with each other, the wireless communication method comprising:

   transmitting a radio signal during the transmission period and receiving a radio signal during the reception period, using a first antenna;
   receiving the radio signal transmitted from the first antenna during the transmission period and receiving a radio signal during the reception period, using a second antenna;

determining a failure of the first antenna based on a ratio of a transmission power and a returning power for the radio signal transmitted from the first antenna; and

determining a failure of the second antenna based on a reception power of a radio signal received by the second antenna during the transmission period and a determination result of the failure of the first antenna.

FIG. 1

FIG. 2

# FIG. 3

| TRANSMISSION PERIOD | RECEPTION PERIOD | TRANSMISSION PERIOD | RECEPTION PERIOD |
|---|---|---|---|
| | | | |
| RADIO SIGNAL TRANSMISSION<br><br>DETECTION OF TRANSMISSION POWER AND RETURNING POWER | RADIO SIGNAL RECEPTION | RADIO SIGNAL TRANSMISSION<br><br>DETECTION OF TRANSMISSION POWER AND RETURNING POWER | RADIO SIGNAL RECEPTION |
| | | | |
| SELF-INTERFERENCE SIGNAL RECEPTION<br><br>SELF-INTERFERENCE POWER DETECTION | RADIO SIGNAL RECEPTION | SELF-INTERFERENCE SIGNAL RECEPTION<br><br>SELF-INTERFERENCE POWER DETECTION | RADIO SIGNAL RECEPTION |

ANTENNA1 ...

ANTENNA2 ...

# FIG. 4

ANTENNA 1 FAILURE
DETERMINATION
(H/L)

VSWR
THRESHOLD
COMPARING UNIT
52

VSWR
DETECTOR
51

TRANSMISSION POWER LEVEL

RETURNING POWER LEVEL

VSWR
THRESHOLD
HOLDING UNIT
53

SELF-INTERFERENCE POWER LEVEL

ANTENNA 2 FAILURE
DETERMINATION
(H/L)

RECEPTION
ANTENNA FAILURE
DETERMINING UNIT
56

SELF-INTERFERENCE
POWER THRESHOLD
COMPARING UNIT
54

SELF-INTERFERENCE
POWER THRESHOLD
HOLDING UNIT
55

# FIG. 5

EP 2 226 955 A2

| ANTENNA1 | ANTENNA2 | NOTIFICATION |
|----------|----------|--------------|
| NORMAL | NORMAL | NORMAL |
| NORMAL | ABNORMAL | ANTENNA 2 IS ABNORMAL |
| ABNORMAL | NORMAL | ANTENNA 1 IS ABNORMAL |
| ABNORMAL | ABNORMAL | ANTENNA 1 IS ABNORMAL |

FIG. 6

# FIG. 7

EP 2 226 955 A2